# EUROPÄISCHE PATENTSCHRIFT

(11) **EP 1 748 208 B1**
(45) Veröffentlichungstag und Bekanntmachung des Hinweises auf die Patenterteilung: **21.04.2010**
(21) Anmeldenummer: 06015206.3
(22) Anmeldetag: 21.07.2006
(51) Int. Cl.: F16D 51/00

(54) **Trommelbremse**
Drum brake
Frein à tambour

(30) Priorität: 28.07.2005 DE 102005035982
(43) Veröffentlichungstag der Anmeldung: 31.01.2007
(73) Patentinhaber: BPW Bergische Achsen KG, 51674 Wiehl (DE)
(72) Erfinder: Mollerus, Bernd, 51674 Wiehl (DE); Köchl, Hans-Ulrich, 51674 Wiehl (DE)
(74) Vertreter: Christophersen & Partner

(56) Entgegenhaltungen:
- EP-A- 0 519 340
- WO-A-03/008830
- DE-C- 746 877
- DE-C1- 19 622 520
- JP-A- 7 293 603
- US-A- 2 003 055

## Beschreibung

Die vorliegende Erfindung betrifft eine Trommelbremse für Fahrzeuge, insbesondere Schwerlastfahrzeuge, mit einer fahrzeuginnenseitig durch ein Abdeckblech geschlossenen Bremstrommel.

Bremstrommeln der genannten Art werden üblicherweise als Gußteile nach bekannten Gußverfahren hergestellt, bei welchen sich nur vergleichsweise schlechte Oberflächenqualitäten und geringe Fertigungstoleranzen erreichen lassen. Deshalb ist es erforderlich, die innere Fläche der Bremstrommel, an welcher die Bremsbeläge anliegen, z.B. spanend nachzubearbeiten, um so die erforderlichen Oberflächenqualitäten zu erhalten. Ein Nacharbeiten der Außenflächen der Bremstrommel ist hingegen nicht erforderlich.

Bei bekannten Trommelbremsen wird die fahrzeuginnenseitige Öffnung der Bremstrommel gegen im Fahrbetrieb auftretende Verunreinigungen wie etwa Staub, Schmutzwasser, kleine Steine usw., durch ein am Bremsträger der Trommelbremse festgelegtes Abdeckblech geschützt. Aus der EP 0 519 340 B1 ist ein Abdeckblech bekannt, welches mit einer in seinem Randbereich vorgesehenen Vertiefung in Richtung der Bremstrommel vorspringt, um auf diese Weise den Abstand zwischen Abdeckblech und Bremstrommel gering zu halten. Die äußere Kante des Abdeckblechs ist von der Bremstrommel weg gerichtet und bildet zu einem axialen Vorsprung der Bremstrommel, dessen Oberfläche nicht nachgearbeitet ist, einen Spalt.

Nachteilig ist, daß dieser Spalt zwischen Abdeckblech und der sich drehenden Bremstrommel wegen der beim Gießen erreichbaren Toleranzen vergleichsweise groß gewählt werden muß, um Kollisionen zwischen Abdeckblech und Bremstrommel auch für den Fall größerer Formabweichungen der unbearbeiteten Bremstrommelflächen sicher zu vermeiden. Dies aber hat zur Folge, daß Verunreinigungen mehr als erwünscht ins Innere der Bremstrommel eindringen können.

Das Dokument US 2003055 offenbart eine Trommelbremse gemäß dem Oberbegriff des Anspruchs 1.

**Aufgabe** der vorliegenden Erfindung ist es daher, durch technische Maßnahmen ein Eindringen von Verunreinigungen in das Innere der Bremstrommel besser als bisher zu verhindern.

Diese Aufgabe wird durch die Merkmale des Anspruchs 1 gelöst.

Mit Hilfe dieser Ausgestaltung läßt sich ein verbesserter Schutz des Bremstrommelinneren erzielen. Denn da der freie äußere Rand des Abdeckblechs zu der oberflächenbearbeiteten und daher eng tolerierbaren Fläche hin vorsteht, läßt sich das Abdeckblech sehr nah an diese Fläche bringen, so daß schmale Spalten entstehen, durch die Verunreinigungen kaum noch eindringen können.

Ebenfalls von Vorteil ist es, wenn der Rand radial bis in den Bereich des Falzes hineinragt. Denn wenn die äußere Kante bis in den von dem Falz umschlossenen Raum hinein ragt, kann der Abstand zwischen Bremsbelag und Abdeckblech sehr klein eingestellt werden. Auch entsteht ein axialer Spalt zwischen Abdeckblech und Bremstrommel, wodurch sich eine insgesamt labyrinthartige Abdichtung des Bremstrommelinneren ergibt.

In weiterer vorteilhafter Ausgestaltung des Erfindungsgedankens wird vorgeschlagen, daß das Abdeckblech mit einer Grundebene oder einem nahe der Bremstrommel ausgebildeten Übergangsbereich in einer Ebene mit der Außenkante der Bremstrommel liegt. Auf diese Weise entsteht ein bündiger Übergang zwischen der Stirnseite der Bremstrommel und dem Abdeckblech, wodurch sich eine für den Transport zum Fahrzeughersteller günstige Gestalt der Trommelbremse ergibt, da keine Kanten o.ä. axial vorstehen, die bei Transport der Trommelbremse Schaden nehmen könnten.

In diesem Zusammenhang ist es ferner möglich, daß der radial äußere Bereich des Abdeckblechs nach Art eines sich zur Bremstrommel hin öffnenden Trichters geformt ist, wodurch sich die Abdichteigenschaften des Abdeckblechs weiter verbessern.

Weitere Einzelheiten und Vorteile werden nachfolgend anhand der Zeichnungen erläutert. Darin zeigen:
- Fig. 1: ein Abdeckblech einer aus dem Stand der Technik bekannten Trommelbremse in teilweise geschnittener Darstellung,
- Fig. 2: den oberen Öffnungsbereich einer erfindungsgemäßen Trommelbremse in einer Schnittdarstellung,
- Fig. 3: die Detailansicht III aus Fig. 2,
- Fig. 4: eine Draufsicht auf eine Hälfte eines erfindungsgemäßes Abdeckblechs und
- Fig. 5: eine Seitenansicht des Abdeckblechs aus Fig. 4.

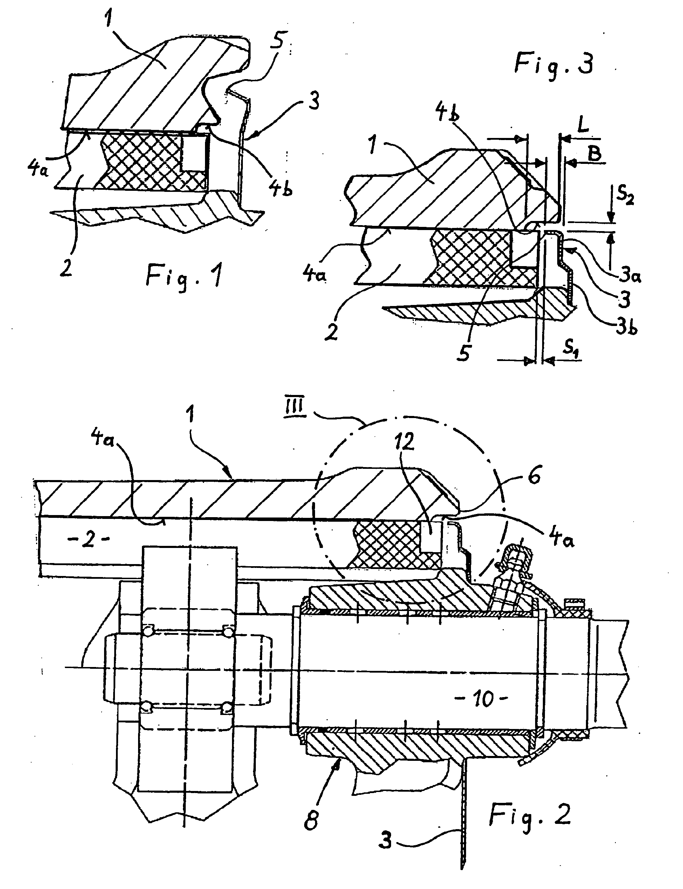

In Fig. 1 ist eine aus dem Stand der Technik bekannte Bremstrommel 1 mit zugehörigem Bremsbelag 2 sowie einer die fahrzeuginnenseitige Öffnung der Bremstrommel abdeckenden Abdeckplatte 3 dargestellt. Die innere Fläche der Bremstrommel 1 setzt sich aus einer Anlagefläche 4a für die Bremsbeläge 2 sowie einem zusätzlichen Falz 4b in Gestalt einer eingedrehten Stufe zusammen, deren Oberflächen z.B. durch Drehen spanend nachgearbeitet sind. Die übrigen Flächen der aus Stahlguß hergestellten Bremstrommel 1 sind nicht nachgearbeitet und unterliegen daher den beim Gießen von Bremstrommeln üblicherweise auftretenden Fertigungstoleranzen, so daß durchaus Maßabweichungen von einigen Millimetern vorkommen. Der äußere Rand 5 des Abdeckblechs 3 steht in Richtung der unbearbeiteten Bremstrommelflächen hin vor, weshalb das Abdeckblech 3 einen den dort zulässigen Fertigungstoleranzen entsprechenden Mindestabstand gegenüber der Bremstrommel einhalten muß, um im Fahrbetrieb Kollisionen bzw. ein Schleifen zwischen Abdeckblech und Bremstrommel auszuschließen. Die minimal erreichbaren Spaltmaße des Abdeckblechs 3 gegenüber den benachbarten Flächen der Trommel bestimmen sich daher wesentlich durch die Fertigungstoleranzen beim Gießen und betragen 5 bis 7 mm, was zu einer nur unzureichenden Abdichtung des Bremstrommelinnern führt.

In Fign. 2 und 3 ist der fahrzeuginnenseitige Öffnungsbereich einer erfindungsgemäßen Trommelbremse dargestellt. Auch diese weist eine durch Gießen hergestellte Bremstrommel 1, Bremsbeläge 2 sowie ein die Bremstrommel 1 von der Innenseite des Fahrzeugs her abdeckendes Abdeckblech 3 auf.
Die äußere Kante 5 des Abdeckblechs 3 steht nicht wie beim Stand der Technik in Richtung unbearbeiteter, nicht exakt rotationssymmetrischer Bremstrommelflächen vor, sondern erstreckt sich in Richtung einer oberflächenbearbeiteten Fläche der Bremstrommel 1. Diese Fläche ist eng toleriert, weshalb das Abdeckblech 3 auch bei Rotation der Bremstrommel 1 bis dicht an die bearbeitete Fläche reicht.

Das Abdeckblech 3 hat die Form einer Kreisscheibe und ist rotations- und ortsfest an einem achsfesten Bremsträger 8 beispielsweise durch Verschrauben befestigt. Die Gestalt des Abdeckblechs 3 läßt sich besser der vergrößerten Darstellung in Fig. 3 entnehmen. Der radial äußere Bereich B des Abdeckblechs 3 ist in etwa rechtwinklig nach fahrzeugaußen, und damit in Richtung auf die oberflächenbearbeiteten Flächen 4a, 4b der Bremstrommel 1 hin gebördelt. Der Rand 5 des Abdeckblechs reicht so bis in den Bereich des Falzes 4b hinein, daß sich ein schmaler axialer Spalt S₁ zwischen der Kante 5 und der Stirnseite des Bremsbelags 2 einstellt. Zu diesem Zweck muß der Falz 4b eine solche Längserstreckung L aufweisen, daß er auf einem Teil dieser Längserstreckung L den freien Rand 5 umgibt. Zugleich führt die Dimension des Falzes 4b zu einem schmalen radialen Spalt S₂ von in etwa 1,5 mm zwischen dem gebördelten äußeren Randbereich B und dem diesen radial außen umgebenden Falz 4b. Durch eine enge Tolerierung der Bremstrommelinnenflächen 4a, 4b können die Spaltmaße S₁, S₂ gering gehalten werden, so daß eine deutlich verbesserte Abdichtung gegenüber dem Stand der Technik erreicht wird. Von Vorteil ist, wenn sich der Rand 5 in Richtung auf Grenzfläche zwischen Bremsbelag 2 und Trommel erstreckt, d. h. auf die Anlagefläche 4a.

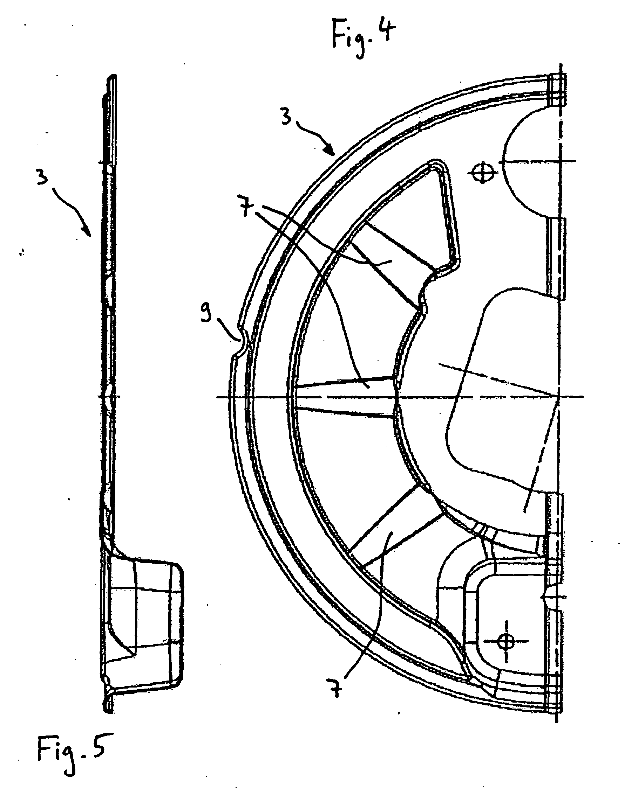

Der Falz 4b dient auch der visuellen Kontrolle des momentan erreichten Bremstrommelverschleisses, der sich aufgrund der Coulombschen Reibung zwischen Bremsbelag 2 und der Anlagefläche 4a der Bremstrommel 1 ergibt. Mit zunehmendem Bremstrommelverschleiß baut sich die Anlagefläche 4a bis zur Höhe des Falzes 4b ab, bis beide in etwa auf demselben Radius liegen und der maximale Bremstrommelverschleiß erreicht ist. Durch Sichtkontrolle der radialen Höhe des Falzes 4b kann somit der momentane Bremstrommelverschleiß abgeschätzt werden. Hierzu ist, wie Fig. 4 dies erkennen läßt, am Rand des gebördelten Achsblechs 3 eine Ausnehmung 9 vorgesehen, die einen Blick in Längsrichtung auf die Kante des Falzes 4a sowie den Bremsbelag 2 mit der Ausnehmung 12 erlaubt.

Ebenfalls in Fig. 4 zu erkennen ist, daß das Abdeckblech 3 mit einer Reihe von Versteifungselementen 7 versehen ist. Diese ragen aus der Ebene des Abdeckblechs 3 in die Öffnung der Bremstrommel 1 hinein.

Wie sich wiederum Fig. 3 besser entnehmen läßt, weist das Achsblech 3 einen Übergangsbereich 3a zwischen dem zur Bremstrommel hin gerichteten Endbereich B und der Grundebene 3b auf. In axialer Richtung betrachtet liegt der Übergangsbereich 3a in etwa in einer Ebene mit der nach fahrzeuginnen weisenden Außenkante 6 der Bremstrommel 1, wodurch sich eine insgesamt ebene Oberflächenkontur der montierten Trommelbremse ohne störende Vorsprünge durch das Abdeckblech 3 ergibt, was sich vor allem beim Transport der Trommelbremsen zum Fahrzeughersteller als vorteilhaft erweist. Denn aufgrund der Anordnung von Bremstrommelaußenkante 6 und des Übergangsbereichs 3a des Abdeckblechs 3 in einer gemeinsamen Ebene sind Transportschäden des Abdeckblechs 3 nahezu ausgeschlossen.

Es ist aber nicht zwingend erforderlich, daß das Abdeckblech 3 einen separaten Übergangsbereich aufweist. Es ist ebensogut auch möglich, daß das Abdeckblech 3 mit der Grundebene 3b auf Höhe der Bremstrommelaußenkante 6 liegt.

### Bezugszeichen

- 1: Bremstrommel
- 2: Bremsbelag
- 3: Abdeckblech
- 3a: Übergangsbereich
- 3b: Grundebene
- 4a: Anlagefläche
- 4b: Falz
- 5: Rand, Außenkante des Abdeckblechs
- 6: Bremstrommelaußenkante
- 7: Versteifungselement
- 8: Bremsträger
- 9: Ausnehmung
- 10: Bemsnockenwelle
- 12: Ausnehmung

- B: Äußerer Radialbereich
- L: Längserstreckung
- S₁: Spalt
- S₂: Spalt

## Patentansprüche

1. Trommelbremse für Fahrzeuge, insbesondere Schwerlastfahrzeuge, mit einer Bremstrommel (1), die fahrzeuginnenseitig durch ein Abdeckblech (3) geschlossen ist, dessen radial äußerer Bereich (B) in Richtung zu der Bremstrommel (1) hin gebördelt ist, so daß der freie Rand (5) des Abdeckblechs (3) zu einer Fläche der Bremstrommel (1) hin vorsteht,
**dadurch gekennzeichnet,**
**daß** die Fläche ein Falz (4b) in Gestalt einer durch Eindrehen oberflächenbearbeiteten Stufe ist, die sich in Längsrichtung an die Anlagefläche (4a) für die Bremsbeläge (2) der Trommelbremse anschließt, und daß der Falz (4b), dessen radiale Höhe dem noch verbleibenden Bremstrommelverschleiß entspricht, auf einen Teil seiner Längserstreckung (L) den freien Rand (5) des Abdeckblechs (3) umgibt.

2. Trommelbremse nach Anspruch 1, **dadurch gekennzeichnet, daß** sich der freie Rand (5) in Richtung auf die Grenzfläche (4a) zwischen Bremstrommel (1) und Bremsbelag (2) erstreckt.

3. Trommelbremse nach Anspruch 1 oder 2, **dadurch gekennzeichnet, daß** der Rand (5) radial bis in den Bereich des Falzes (4b) hinein ragt.

4. Trommelbremse nach einem der vorangehenden Ansprüche, **dadurch gekennzeichnet, daß** das Abdeckblech (3) mit einer Grundebene (3b) oder einem nahe der Bremstrommel (1) ausgebildeten Übergangsbereich (3a) in einer Ebene mit der Außenkante (6) der Bremstrommel liegt.

5. Trommelbremse nach Anspruch 1, **dadurch gekennzeichnet, daß** in dem Abdeckblech (3) vorgesehene Versteifungselemente (7) in Richtung der Bremstrommel (1) aus dem Abdeckblech (3) hervorstehen.

## Claims

1. Drum brake for vehicles, in particular heavy goods vehicles, comprising a brake drum (1) which is closed towards the inside of the vehicle by a cover plate (3), the radially outer region (B) of which in the direction of the brake drum (1) is bent so that the free edge (5) of the cover plate (3) protrudes towards a face of the brake drum (1), **characterised in that** the face is a recess (4b) in the form of a step which has been surface-machined by turning and which adjoins in the longitudinal direction the bearing face (4a) for the brake linings (2) of the drum brake, and **in that** the recess (4b), the radial height of which corresponds to the remaining wear on the brake drum, encloses along part of its longitudinal extent (L) the free edge (5) of the cover plate (3).

2. Drum brake according to claim 1, **characterised in that** the free edge (5) extends in the direction of the boundary (4a) between the brake drum (1) and the brake lining (2).

3. Drum brake according to claim 1 or 2, **characterised in that** the edge (5) protrudes radially into the region of the recess (4b).

4. Drum brake according to one of the preceding claims, **characterised in that** the cover plate (3) lies with a main plane (3b) or a transition region (3a) formed close to the brake drum (1) in a plane with the outer rim (6) of the brake drum.

5. Drum brake according to claim 1, **characterised in that** stiffening elements (7) provided in the cover plate (3) protrude from the cover plate (3) in the direction of the brake drum (1).

## Revendications

1. Frein à tambour pour véhicules, en particulier pour véhicules du type poids lourd, comportant un tambour de frein (1), qui est fermé du côté intérieur du véhicule par une plaque de recouvrement (3), dont la zone (B) radialement extérieure est repliée en direction du tambour de frein (1), de telle sorte que le bord libre (5) de la plaque de recouvrement (3) s'avance en saillie vers une surface du tambour de frein (1),
**caractérisé en ce que** la surface comporte une gorge (4b) formant un gradin usiné en surface par tournage dans la masse, laquelle est située dans la direction longitudinale en prolongement de la surface d'appui (4a) pour les garnitures de frein (2) du tambour de frein, et **en ce que** la gorge (4b), dont la hauteur radiale correspond à l'usure restante du tambour de frein, entoure le bord libre (5) de la plaque de recouvrement (3) sur une partie de sa dimension longitudinale (L).

2. Frein à tambour selon la revendication 1, **caractérisé en ce que** le bord libre (5) s'étend vers l'interface (4a) entre le tambour de frein (1) et la garniture de frein (2).

3. Frein à tambour selon la revendication 1 ou 2, **caractérisé en ce que** le bord (5) s'engage radialement vers l'intérieur jusque dans la zone de la gorge (4b).

4. Frein à tambour selon l'une quelconque des revendications précédentes, **caractérisé en ce que** la plaque de recouvrement (3) avec un plan de base (3b) ou une zone de transition (3a) réalisée à proximité du tambour de frein (1), est située dans un plan avec le bord extérieur (6) du tambour de frein.

5. Frein à tambour selon la revendication 1, **caractérisé en ce que** des éléments de raidissement (7), prévus dans la plaque de recouvrement (3), s'avancent en saillie vers le tambour de frein (1) hors de la plaque de recouvrement (3).
